# EUROPEAN PATENT SPECIFICATION

(11) **EP 4 001 788 B1**
(45) Date of publication and mention of the grant of the patent: **20.08.2025**
(21) Application number: 19938731.7
(22) Date of filing: 19.07.2019
(51) Int. Cl.: F24F 7/08, F24F 13/20, F24F 11/89, F24F 12/00, F24F 13/28

(54) **HEAT-EXCHANGE TYPE VENTILATION DEVICE**
WÄRMEAUSTAUSCHLÜFTER
DISPOSITIF DE VENTILATION DE TYPE À ÉCHANGE DE CHALEUR

(43) Date of publication of application: 25.05.2022
(73) Proprietor: MITSUBISHI ELECTRIC CORPORATION, Chiyoda-ku Tokyo 100-8310 (JP)
(72) Inventor: NAGATA, Fukutaro, Tokyo 100-8310 (JP); MIYAZAKI, Yuki, Tokyo 100-8310 (JP); MATSUBARA, Yasumitsu, Tokyo 100-8310 (JP)
(74) Representative: Witte, Weller & Partner Patentanwälte mbB
(86) International application number: PCT/JP2019/028461
(87) International publication number: WO 2021/014491

(56) References cited:
- EP-A1- 2 206 977
- EP-A1- 2 426 425
- WO-A1-2010/125632
- CN-A- 105 823 126
- FR-A1- 3 032 782
- JP-A- 2001 091 008
- JP-A- 2004 003 869
- JP-A- 2015 158 308
- KR-A- 20060 025 925
- KR-A- 20060 025 925
- US-A1- 2014 117 825

## Description

### Field

The present invention relates to a heat exchange ventilator for ventilation while exchanging heat between air from outside a room and air from inside the room.

### Background

Heat exchange ventilators that are installed in buildings and perform ventilation while exchanging heat between air from outside a room and air from inside the room have been known.

For example, International Publication No. WO 2009/090395 discloses a heat exchange ventilator including a box-shaped housing, a heat exchanging element that is located in the housing and exchanges heat between air from outside a room and air from inside the room, and a control board located above the heat exchanging element in the housing. A top plate of the housing has a plurality of duct connection ports each connected with a duct, an opening through which the inside of the housing communicates with the outside thereof, and a cover that is openable and closable and covers the opening when the cover is closed. A control board is located just below the opening. An operator can open the cover and perform work on the control board through the opening. Note that the work on the control board refers to work of connecting a sensor to the control board, work of changing control settings, and the like.

Document KR 2006 0025925 A discloses a heat exchange ventilator comprising a housing in a box shape, an air supply passage, an air exhaust passage, a supply fan, an exhaust fan, a heat exchange element for exchanging heat between supply and exhaust air and a control box that is attached to an auxiliary casing outside of the heat exchange ventilator housing enabling a pull-out of control board in a drawer-type manner.

Document FR 3 032 782 A1 discloses a ventilaction device.

Document EP 2 426 425 A1, according to its abstract, states that in a configuration of a heat exchanging ventilator in which an air supply fan, an discharge fan, and a heat exchanger are disposed inside a housing and which performs ventilation while exchanging heat using the heat exchanger between outdoor air suctioned into the housing by the air supply fan and indoor air suctioned into the housing by the air discharge fan and is capable of accumulating water caused by dew condensation inside the housing, the housing is configured by using an inner housing which is integrally molded in a box shape with one open face and a drain pan which is disposed at the open face of the inner housing. This prevents the water from leaking when the heat exchanging ventilator is installed whichever of the ceiling and the floor of a room.

Document CN 105 823 126 A, according to its abstract, states an air conditioner which comprises an electric control box and an air conditioner shell. Guide rails and pull-limiting units are arranged at the top of the air conditioner shell. The electric control box is connected with the guide rails in a sliding mode. The pull-limiting units are fixed to the side, close to the pulling direction of the electric control box, of the top of the air conditioner shell. Pull handles are further fixedly connected to the side, close to the pull direction, of the electric control box. The air conditioner is simple in structure, the electric control box and the air conditioner shell of the air conditioner are integrated, and the electric control box can be detected, repaired and upgraded simply and conveniently in a pulling mode.

Document US 2014/117825 A1, according to its abstract, states that an air conditioner includes a control box assembly capable of efficiently utilizing a space inside a control box and easily performing inspection and repair of a circuit unit disposed in the control box. The air conditioner includes a case that constitutes an exterior and a control box assembly mounted in the case, wherein the control box assembly includes a control box in which an accommodation portion is formed, a sliding panel having one side on which a circuit unit is mounted and being accommodated in the accommodation portion so as to be taken out of the control box, and a rotation panel having one side on which the circuit unit is mounted and being rotatably mounted at one side of the control box.

### Summary

### Technical Problem

With the structure described in International Publication No. WO 2009/090395 in which the cover is opened and the work on the control board is performed through the opening, however, the work on the control board is performed with the control board remaining inside the housing. This is disadvantageous in that the work on the control board is awkward.

The present invention has been made in view of the above, and an object thereof is to provide a heat exchange ventilator that facilitates work on a control board.

### Solution to Problem

In order to solve the above problem and achieve the object, a heat exchange ventilator according to the present invention is defined in claim 1. Preferred embodiments of the present invention are defined in the dependent claims.

### Advantageous Effects of Invention

According to the present invention, an effect of facilitating work on the control board is produced.

### Brief Description of Drawings

FIG. 1 is an exploded perspective view of a heat exchange ventilator according to a first embodiment of the present invention.
FIG. 2 is a perspective view illustrating an assembly state of the heat exchange ventilator illustrated in FIG. 1, in which the heat exchange ventilator is hung and installed on a wall surface of a building.
FIG. 3 is a perspective view illustrating a state in which a control board is pulled out of a housing of the heat exchange ventilator illustrated in FIG. 2.
FIG. 4 is a perspective view illustrating a state in which filters and filter covers are removed from the heat exchange ventilator illustrated in FIG. 2.
FIG. 5 is a plan view of the heat exchange ventilator according to the first embodiment.
FIG. 6 is a bottom view of the heat exchange ventilator according to the first embodiment.
FIG. 7 is a front view of the heat exchange ventilator according to the first embodiment.
FIG. 8 is a back view of the heat exchange ventilator according to the first embodiment.
FIG. 9 is a side view of the heat exchange ventilator according to the first embodiment.
FIG. 10 is a cross-sectional view along line X-X illustrated in FIG. 9.
FIG. 11 is a perspective view of a heat exchanging element of the heat exchange ventilator according to the first embodiment.
FIG. 12 is a cross-sectional view along line XII-XII illustrated in FIG. 6.
FIG. 13 is a perspective view illustrating an assembly state of a heat exchange ventilator according to a second embodiment of the present invention, in which the heat exchange ventilator is hung and installed on a wall surface of a building.
FIG. 14 is a perspective view illustrating a state in which a control board is pulled out of a housing of the heat exchange ventilator illustrated in FIG. 13.
FIG. 15 is a perspective view illustrating a state in which filters and filter covers are removed from the heat exchange ventilator illustrated in FIG. 13.
FIG. 16 is a plan view of the heat exchange ventilator according to the second embodiment.
FIG. 17 is a bottom view of the heat exchange ventilator according to the second embodiment.
FIG. 18 is a front view of the heat exchange ventilator according to the second embodiment.
FIG. 19 is a back view of the heat exchange ventilator according to the second embodiment.
FIG. 20 is a side view of the heat exchange ventilator according to the second embodiment.

### Description of Embodiments

A heat exchange ventilator according to embodiments of the present invention will be described in detail below with reference to the drawings. Note that the present invention is not limited to the embodiments but only to the appended claims.

### First Embodiment.

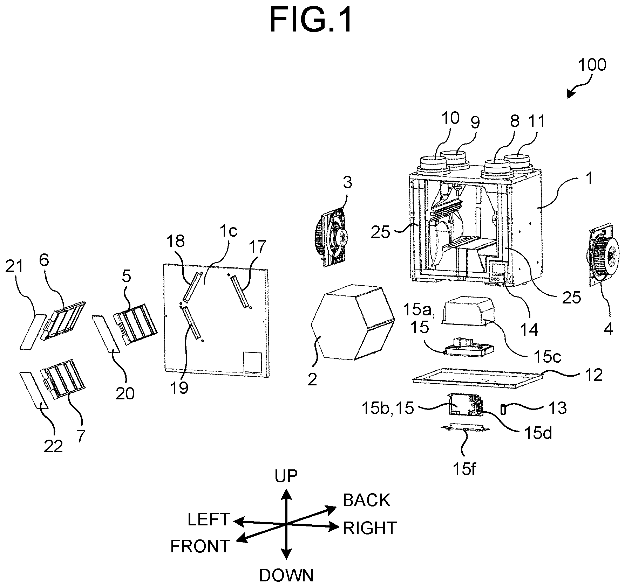

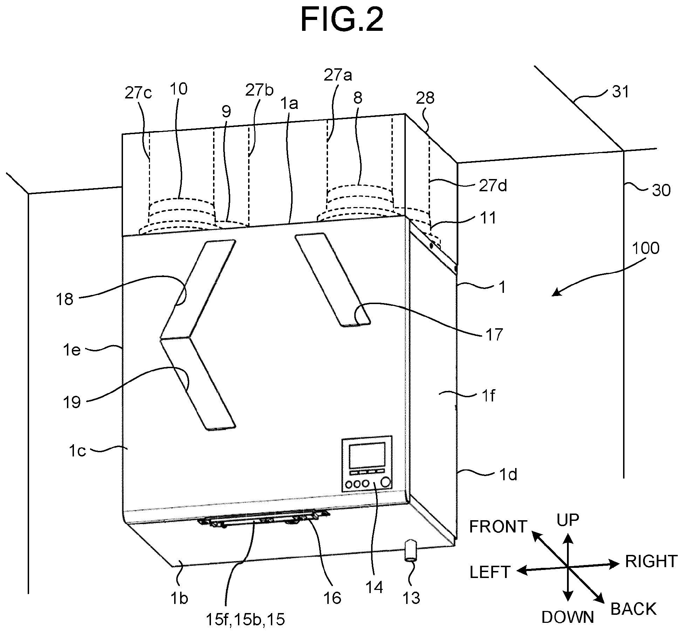

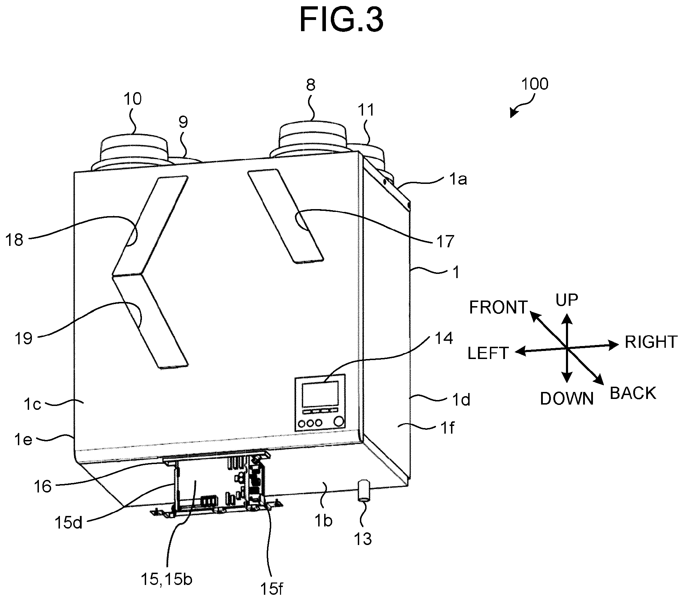

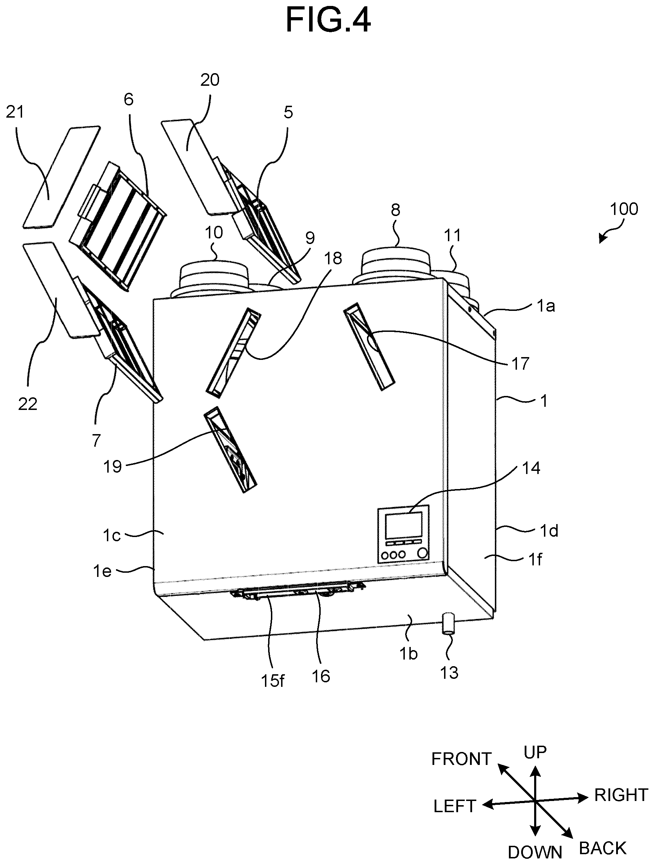

FIG. 1 is an exploded perspective view of a heat exchange ventilator 100 according to a first embodiment of the present invention. FIG. 2 is a perspective view illustrating an assembly state of the heat exchange ventilator 100 illustrated in FIG. 1, in which the heat exchange ventilator 100 is hung and installed on a wall surface 30 of a building. FIG. 3 is a perspective view illustrating a state in which a control board 15 is pulled out of a housing 1 of the heat exchange ventilator 100 illustrated in FIG. 2. FIG. 4 is a perspective view illustrating a state in which filters 5, 6, and 7 and filter covers 20, 21, and 22 are removed from the heat exchange ventilator 100 illustrated in FIG. 2. As illustrated in FIG. 1, the heat exchange ventilator 100 includes the housing 1, a heat exchanging element 2, a supply fan 3, an exhaust fan 4, an outside air filter 5, an exhaust filter 6, and a supply filter 7. The heat exchange ventilator 100 also includes an outside inlet 8, an inside inlet 9, an inside outlet 10, an outside outlet 11, a drain pan 12, a drain hole 13, an operation unit 14, and the control board 15. The heat exchange ventilator 100 is a device for ventilating a room while performing heat exchange between air from outside the room and air from inside the room. As illustrated in FIG. 2, the heat exchange ventilator 100 is installed near a ceiling surface 31 on the wall surface 30 of the building.

The housing 1 is a box-shaped member constituting an outline of the heat exchange ventilator 100. The housing 1 may have a cubic shape, but has a rectangular parallelepiped shape in the first embodiment. The housing 1 has a top plate 1a, a bottom plate 1b, a front plate 1c, a back plate 1d, a left side plate 1e, and a right side plate 1f. In the first embodiment, a plate of the housing 1 that is in contact with the wall surface 30 is the back plate 1d, and a plate thereof that is located opposite the wall surface 30 with the back plate 1d therebetween is the front plate 1c. Note that, for explanation of directions, the normal direction of the front plate 1c will referred to as a forward direction, the normal direction of the back plate 1d will be referred to as a backward direction, the up-down direction as viewed from a user facing the front plate 1c will be referred to as the up-down direction, and the left-right direction as viewed from the user facing the front plate 1c will be referred to as the left-right direction.

The normal line of the top plate 1a is directed upward. The top plate 1a has a rectangular shape in plan view. The top plate 1a has: the outside inlet 8 for drawing air from outside the room into the housing 1; and the inside inlet 9 for drawing air from the room into the housing 1. The top plate 1a has: the inside outlet 10 for blowing the air, from outside the room, out of the housing 1; and the outside outlet 11 for blowing the air, from inside the room, out of the housing 1. A duct 27a communicating with the outside of the room is connected to the outside inlet 8, which is a duct connection port. A duct 27b communicating with the inside of the room is connected to the inside inlet 9, which is a duct connection port. A duct 27c communicating with the inside of the room is connected to the inside outlet 10, which is a duct connection port. A duct 27d communicating with the outside of the room is connected to the outside outlet 11, which is a duct connection port. A design element 28 for hiding the outside inlet 8, the inside inlet 9, the inside outlet 10, the outside outlet 11, and the ducts 27a, 27b, 27c, and 27d is placed on the top plate 1a.

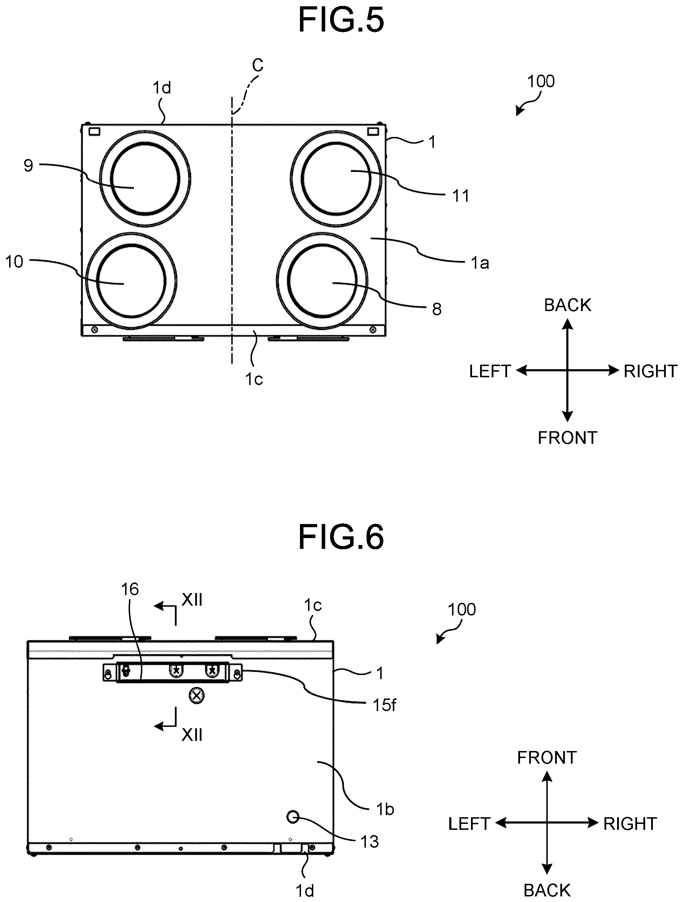

FIG. 5 is a plan view of the heat exchange ventilator 100 according to the first embodiment. Note that a line passing the center in the left-right direction of the top plate 1a and extending in a direction perpendicular to the front plate 1c and the back plate 1d will be referred to as a center line C. The inside inlet 9 and the inside outlet 10 are located on the left of the center line C. The outside inlet 8 and the outside outlet 11 are located on the right of the center line C. The outside inlet 8 is located on the front side of the outside outlet 11. The inside outlet 10 is located on the front side of the inside inlet 9. The outside inlet 8 and the inside outlet 10 are located at positions aligned in the front-back direction. The inside inlet 9 and the outside outlet 11 are located at positions aligned in the front-back direction.

FIG. 6 is a bottom view of the heat exchange ventilator 100 according to the first embodiment. The normal line of the bottom plate 1b is directed downward. The bottom plate 1b has a rectangular shape in bottom view. The bottom plate 1b is located below and away from the top plate 1a. The bottom plate 1b has a board opening 16 through which the inside of the housing 1 communicates with the outside thereof. The board opening 16 is an opening through which the control board 15 is drawn out of the housing 1 and inserted into the housing 1. The board opening 16 has a rectangular shape as viewed from below. The board opening 16 is located on the front side with respect to the center of the bottom plate 1b in the front-back direction. In the first embodiment, the board opening 16 is located on the bottom plate 1b near the boundary with the front plate 1c. The bottom plate 1b has the drain hole 13. In the first embodiment, the drain hole 13 is located near a right back corner of the bottom plate 1b.

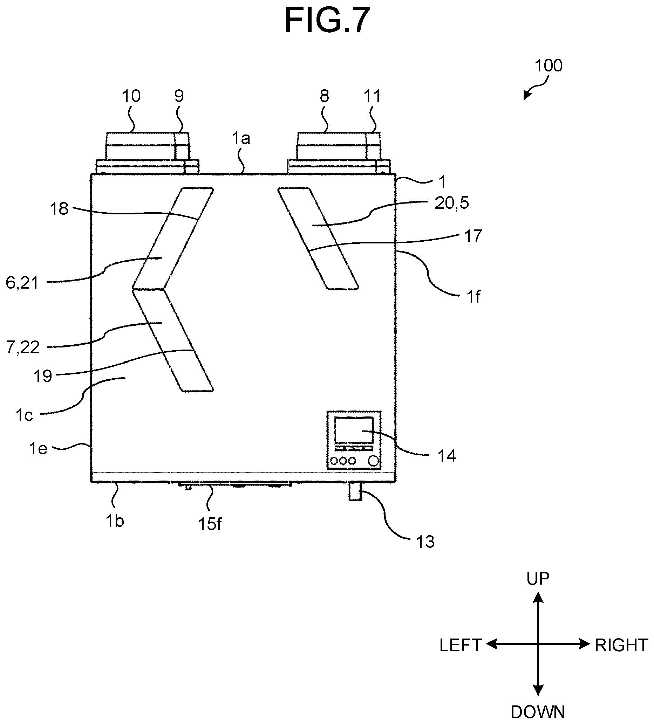

FIG. 7 is a front view of the heat exchange ventilator 100 according to the first embodiment. The normal line of the front plate 1c is directed forward, that is to the front. The front plate 1c connects between front ends of the top plate 1a and the bottom plate 1b. The front plate 1c has a rectangular shape in front view. As illustrated in FIGS. 4 and 7, the front plate 1c has an outside air filter opening 17, an exhaust filter opening 18, and a supply filter opening 19, through which the inside of the housing 1 communicates with the outside thereof.

The outside air filter opening 17 is an opening through which the outside air filter 5 is attached into and removed out of the housing 1. The outside air filter opening 17 is located on the right of the center of the front plate 1c in the left-right direction. The outside air filter opening 17 has a parallelogram shape as viewed from the front. The outside air filter opening 17 is sloped in such a manner that the position thereof is closer to the right side plate 1f as it is lower. An outside air filter cover 20 is openable and closable. The outside air filter cover 20 in a closed state covers the outside air filter opening 17. The operation unit 14 for such operations as starting and stopping the operation of the heat exchange ventilator 100 is provided on the front plate 1c below the outside air filter opening 17. In the first embodiment, the operation unit 14 is located near a lower right corner of the front plate 1c.

The exhaust filter opening 18 is an opening through which the exhaust filter 6 is attached into and removed out of the housing 1. The exhaust filter opening 18 is located on the left of the center of the front plate 1c in the left-right direction, and at the same height as the outside air filter opening 17. The exhaust filter opening 18 has a parallelogram shape as viewed from the front. The exhaust filter opening 18 is sloped in such a manner that the position thereof is closer to the left side plate 1e as it is lower. An exhaust filter cover 21 is openable and closable. The exhaust filter cover 21 in a closed state covers the exhaust filter opening 18.

The supply filter opening 19 is an opening through which the supply filter 7 is attached into and removed out of the housing 1. The supply filter opening 19 is located on the left of the center of the front plate 1c in the left-right direction, and at a position lower than the exhaust filter opening 18. The supply filter opening 19 has a parallelogram shape as viewed from the front. The supply filter opening 19 is sloped in such a manner that the position thereof is closer to the right side plate 1f as it is lower. A supply filter cover 22 is openable and closable. The supply filter cover 22 in a closed state covers the supply filter opening 19.

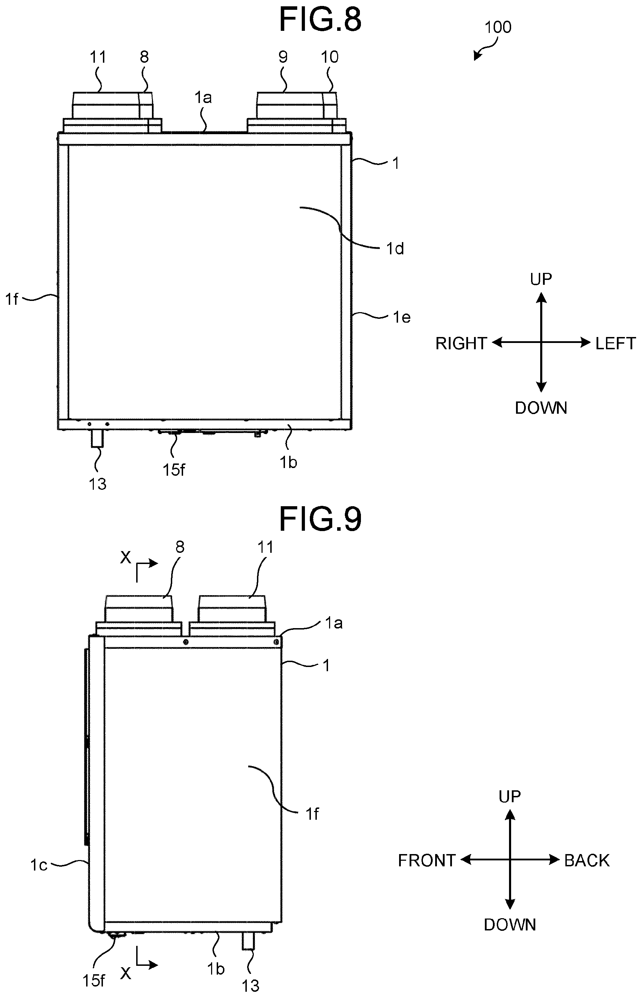

FIG. 8 is a back view of the heat exchange ventilator 100 according to the first embodiment. The normal line of the back plate 1d is directed backward. The back plate 1d connects between back ends of the top plate 1a and the bottom plate 1b. The back plate 1d has a rectangular shape in back view.

FIG. 9 is a side view of the heat exchange ventilator 100 according to the first embodiment. The normal line of the right side plate 1f is directed rightward. The right side plate 1f connects between right ends of the top plate 1a and the bottom plate 1b. The right side plate 1f has a rectangular shape in side view. The normal line of the left side plate 1e illustrated in FIG. 8 is directed leftward. The left side plate 1e connects between left ends of the top plate 1a and the bottom plate 1b. The left side plate 1e has a rectangular shape in side view.

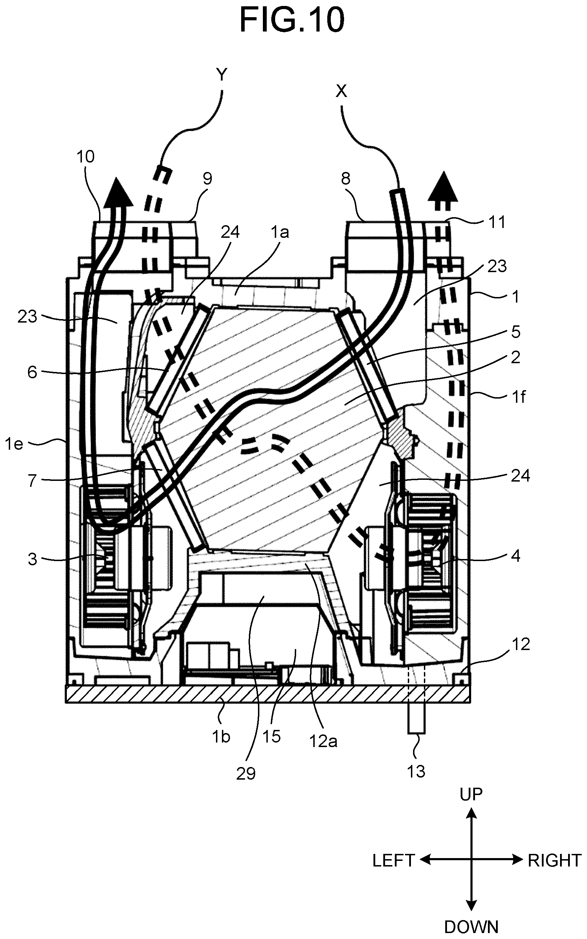

FIG. 10 is a cross-sectional view along line X-X illustrated in FIG. 9. A solid arrow X illustrated in FIG. 10 indicates the flow of air from outside to inside the room, that is, the supply air flow. A dashed arrow Y illustrated in FIG. 10 indicates the flow of air from inside to outside the room, that is, the exhaust air flow. Note that, in FIG. 10, for easier explanation, the outside inlet 8 and the inside outlet 10 are not in sectional view. A supply air passage 23 for supplying air from outside the room into the room and an exhaust air passage 24 for exhausting air from inside the room to the outside thereof are formed in the housing 1. The supply air passage 23 is an air passage for taking outside air into the housing 1 through the outside inlet 8, and supplying the air toward the inside of the room through the inside outlet 10. The exhaust air passage 24 is an air passage for taking inside air into the housing 1 through the inside inlet 9 and exhausting the air toward the outside of the room through the outside outlet 11. Hereinafter, an upstream side and a downstream side are based on the direction in which air flows through the supply air passage 23 or the exhaust air passage 24.

In the supply air passage 23, the outside air filter 5, the heat exchanging element 2, and the supply fan 3 are arranged in this order from the upstream side. Part of the supply air passage 23 is formed of a heat insulating component 25 illustrated in FIG. 1 in order to suppress occurrence of condensation.

In the exhaust air passage 24, the exhaust filter 6, the heat exchanging element 2, and the exhaust fan 4 are arranged in this order from the upstream side. Part of the exhaust air passage 24 is formed of the heat insulating component 25 illustrated in FIG. 1 in order to suppress occurrence of condensation.

The heat exchanging element 2 is a member that exchanges heat between the outside air flowing in the supply air passage 23 and the inside air flowing in the exhaust air passage 24. The heat exchanging element 2 is installed in the housing 1 between the top plate 1a and a base 12a. A space 29 for accommodating the control board 15 is formed between the base 12a and the bottom plate 1b. The heat exchanging element 2 is located in the middle of the housing 1 in the left-right direction. The heat exchanging element 2 is horizontally installed in the first embodiment, but may be sloped.

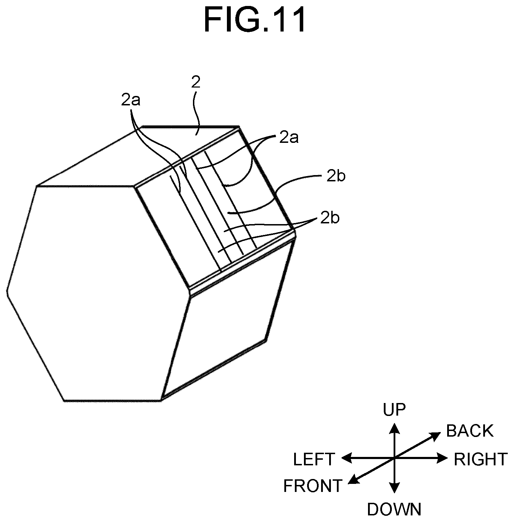

FIG. 11 is a perspective view of the heat exchanging element 2 of the heat exchange ventilator 100 according to the first embodiment. The shape of the heat exchanging element 2 may be any polygonal prism shape, which is not particularly limited, and is a hexagonal prism in the first embodiment. The heat exchanging element 2 includes a plurality of partition members 2a arranged with spaces therebetween, and a plurality of spacer members 2b for keeping the spaces between the partition members 2a. The partition members 2a are each formed in a sheet processed to be flat. The partition members 2a and the spacer members 2b are alternately stacked. An air passage is formed between partition members 2a adjacent to each other. In the heat exchanging element 2, air passages through which air from outside the room flows and air passages through which air from inside the room flows are alternately arranged. The heat exchanging element 2 is a crossflow heat exchanging element in which the direction of the air-flow from outside to the room and the direction of the air-flow from inside the room to outside are perpendicular to each other in the first embodiment. However, the heat exchanging element 2 may be a counterflow heat exchanging element in which the direction of the air-flow from outside to the room and the direction of the air-flow from inside the room to outside differ from each other by 180 degrees.

A stacking direction, which is the direction the partition members 2a and the spacer members 2b are stacked, coincides with the front-back direction, which is the direction perpendicular to the front plate 1c and the back plate 1d, in the first embodiment. Alternatively, the stacking direction may be in line with the up-down direction, which is perpendicular to the top plate 1a and the bottom plate 1b, or may be in line with the left-right direction, which is perpendicular to the left side plate 1e and the right side plate 1f. The heat exchanging element 2 may be enabled to perform both sensible heat exchange and latent heat exchange by appropriately changing the materials of the partition members 2a, or may be able to perform either one of sensible heat exchange and latent heat exchange.

As illustrated in FIG. 10, the supply fan 3 is a fan located in the supply air passage 23. The supply fan 3 takes air into the supply air passage 23 through the outside inlet 8, and sends air into the room through the inside outlet 10. The supply fan 3 is located downstream of the heat exchanging element 2, the outside air filter 5, and the supply filter 7.

The exhaust fan 4 is a fan located in the exhaust air passage 24. The exhaust fan 4 takes air into the exhaust air passage 24 through the inside inlet 9, and sends air to outside the room through the outside outlet 11. The exhaust fan 4 is located downstream of the exhaust filter 6 and the heat exchanging element 2.

The outside air filter 5 is a member that is located in the supply air passage 23 and collects dust contained in air from outside the room. The outside air filter 5 is located downstream of the outside inlet 8 and upstream of the heat exchanging element 2. The outside air filter 5 is located at an outside air inlet of the heat exchanging element 2. Collection of dust by the outside air filter 5 suppresses clogging of the heat exchanging element 2 due to adhesion of dust. The outside air filter 5 is located on the right of the center of the housing 1 in the left-right direction.

The supply filter 7 is a member that is located in the supply air passage 23 and collects dust contained in air from outside the room. The supply filter 7 is located downstream of the heat exchanging element 2 and upstream of the inside outlet 10. The supply filter 7 is located at an outside air outlet of the heat exchanging element 2. Provision of two filters, which are the outside air filter 5 and the supply filter 7, in the supply air passage 23 makes the air from outside the room cleaner. The supply filter 7 is located on the left of the center of the housing 1 in the left-right direction.

The exhaust filter 6 is a member that is located in the exhaust air passage 24 and collects dust contained in the air from inside the room. The exhaust filter 6 is located downstream of the inside inlet 9 and upstream of the heat exchanging element 2. The exhaust filter 6 is located at an inside air inlet of the heat exchanging element 2. The exhaust filter 6 is located on the left of the center of the housing 1 in the left-right direction.

The drain pan 12 is a member that is located below the heat exchanging element 2 and stores drainage produced in the heat exchanging element 2. The drain pan 12 is located on the bottom plate 1b.

The drain hole 13 is a member for discharging drainage stored in the drain pan 12 to outside the housing 1. The drain hole 13 is formed in a cylindrical shape extending in the up-down direction. The drain hole 13 extends through the bottom plate 1b and the drain pan 12. A lower end of the drain hole 13 is projected downward from the bottom plate 1b. An upper end of the drain hole 13 is at a position at the same height as a bottom face of the drain pan 12.

The control board 15 is located in the space 29 below the heat exchanging element 2. The control board 15 is electrically connected with the operation unit 14 illustrated in FIG. 1 by a cable, which is not illustrated. As illustrated in FIG. 1, the control board 15 includes a first board 15a and a second board 15b. The first board 15a is a board connected with a power supply, which is not illustrated. The first board 15a is contained in a first board case 15c having a box shape and opening downward. The second board 15b is a board including: a connection part to which a sensor, which is not illustrated, is connected; a control setting unit; and the like. The sensor connected to the second board 15b is a humidity sensor or a CO₂ sensor, for example. The second board 15b is attached to a second board case 15d.

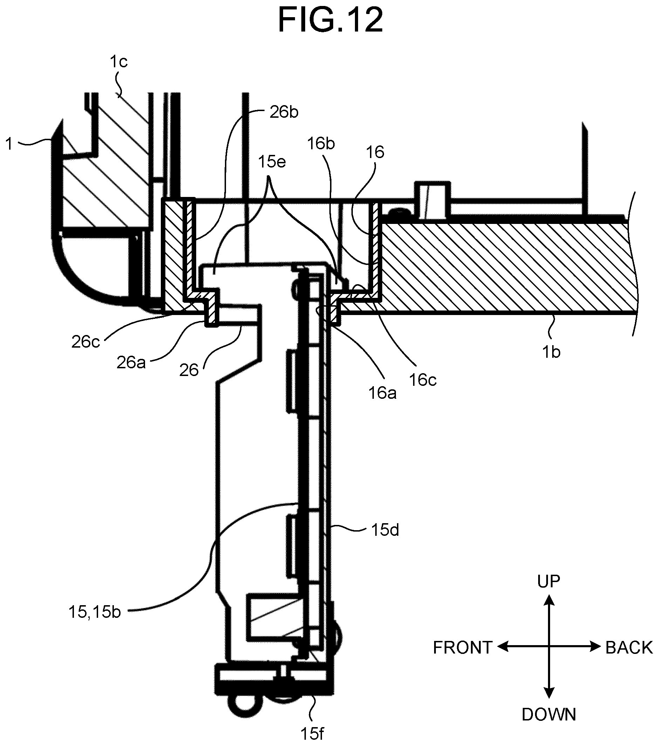

FIG. 12 is a cross-sectional view along line XII-XII illustrated in FIG. 6. A rib 15e projecting frontward or backward is formed on an upper end of the second board case 15d. A board cover 15f is attached to a lower end of the second board case 15d. The board cover 15f covers the board opening 16 when the second board case 15d and the second board 15b are inserted in the housing 1.

The bottom plate 1b has the board opening 16 through which the second board 15b can be drawn out of the housing 1. The second board case 15d and the second board 15b can be drawn downward from the inside of the housing 1 through the board opening 16, so that the second board 15b can be exposed out of the housing 1. An inner wall of the board opening 16 includes a first wall 16a, a second wall 16b, and a connecting wall 16c. The first wall 16a and the second wall 16b are both formed in a quadrangle cylinder shape. The second wall 16b is located above the first wall 16a. The second wall 16b has an opening area larger than that of the first wall 16a. The connecting wall 16c is a flat part connecting an upper end of the first wall 16a with a lower end of the second wall 16b.

A positioning frame 26 is fitted into the board opening 16. The positioning frame 26 includes a first frame 26a, a second frame 26b, and a contact part 26c. The first frame 26a is a part having a quadrangle frame shape to be fitted into the first wall 16a. The second frame 26b is a part having a quadrangle frame shape to be fitted into the second wall 16b. The second frame 26b has an opening area larger than that of the first frame 26a. The contact part 26c is a flat part connecting an upper end of the first frame 26a and a lower end of the second frame 26b. The contact part 26c is located above the connecting wall 16c. The contact part 26c is in contact with the rib 15e in a state in which the second board 15b is drawn out of the housing 1. The contact between the rib 15e and the contact part 26c holds the second board case 15d drawn out of the housing 1 and the second board 15b in a stationary state. The rib 15e and the contact part 26c constitute a holder that holds the control board 15 drawn out of the housing 1 in a stationary state.

Next, effects of the heat exchange ventilator 100 will be explained.

In the first embodiment, the housing 1 has the board opening 16 through which the second board 15b, which is a part of the control board 15, can be drawn out of the housing 1. Thus, work on the second board 15b can be performed in a state in which the second board 15b is drawn out from inside the housing 1 via the board opening 16. This facilitates the work on the second board 15b as compared with a case where work on the second board 15b is performed through an opening of the housing 1 with the second board 15b remaining inside the housing 1.

In the first embodiment, the housing 1 has the bottom plate 1b facing downward, and the bottom plate 1b has the board opening 16 through which the second board 15b, which is a part of the control board 15, can be drawn out of the housing 1. Thus, even in a case where the heat exchange ventilator 100 is installed near the ceiling surface 31 on the wall surface 30 of the building, the work on the second board 15b can be performed at a low position. In addition, this allows a sufficient work space between the housing 1 and a floor surface. As a result, the work on the second board 15b is facilitated.

In the first embodiment, because the second board 15b is drawn downward from the inside of the housing 1, it is not necessary to look up at the second board 15b for the work on the second board 15b even in the case where the heat exchange ventilator 100 is installed near the ceiling surface 31 on the wall surface 30 of the building. In other words, the second board 15b can be viewed from the front during the work on the second board 15b. This further facilitates the work on the second board 15b. In addition, because the board opening 16 is formed in the bottom plate 1b and the second board 15b is drawn downward from inside the housing 1, the design of the front plate 1c, which serves as a design face, is not diminished.

In a case where the board opening 16, the design element 28, and the ducts 27a, 27b, 27c, and 27d are provided on one plate, such as the top plate 1a, of the housing 1, for working on the second board 15b after installation of the heat exchange ventilator 100, the design element 28 needs to be removed and reset, and the ducts 27a, 27b, 27c, and 27d located on the top plate 1a become hindrances to the work. This makes the work on the second board 15b complicated. In contrast, in the first embodiment, the design element 28 that hides the outside inlet 8, the inside inlet 9, the inside outlet 10, the outside outlet 11, and the ducts 27a, 27b, 27c, and 27d is placed on the top plate 1a. In addition, in the first embodiment, the bottom plate 1b has the board opening 16 through which the second board 15b can be drawn out of the housing 1. In other words, the board opening 16, the design element 28 and the ducts 27a, 27b, 27c, and 27d are provided on different plates of the housing 1. Thus, for working on the second board 15b after installation of the heat exchange ventilator 100, the design element 28 need not be removed and reset, and the ducts 27a, 27b, 27c, and 27d are not hindrances to the work on the second board 15b. As a result, the work on the second board 15b is facilitated.

In the first embodiment, the rib 15e and the positioning frame 26 that hold the second board case 15d drawn out of the housing 1 and the second board 15b in a stationary state are provided. Because the second board case 15d and the second board 15b are held in a stationary state, work of wire connection to the second board 15b and work of connecting a sensor to the second board 15b are facilitated.

In the first embodiment, the control board 15 includes the first board 15a and the second board 15b, and the second board 15b can be drawn out of the housing 1 through the board opening 16. This enables only the second board 15b, for which periodic work such as sensor replacement and change of control settings is necessary, to be drawn out, which enables efficient work on the second board 15b. Note that, while the control board 15 is separated into the first board 15a and the second board 15b in the first embodiment, the first board 15a and the second board 15b may be integrated so that the control board 15 is a single board. In this case, the single board can be drawn out through the board opening 16, and work on the entire control board 15 can be performed.

In the supply air passage 23 illustrated in FIG. 10, a portion that belongs to upstream of the heat exchanging element 2 preferably has a sufficiently large air passage cross sectional area to minimize the pressure loss. In addition, the heat exchange ventilator 100 is required to increase the effect of cleaning air from outside the room. Because of limitations of product size, however, the air passage cross sectional area of the part of the supply air passage 23 upstream of the heat exchanging element 2 may be small, and the space for the outside air filter 5 may be small. As a result, the outside air filter 5 may also be decreased in size, which may reduce the air cleaning effect. Thus, in the first embodiment, the supply filter 7 is further placed between the heat exchanging element 2 and the supply fan 3. In other words, a total of two filters 5 and 7 are arranged, one on the upstream side and the other on the downstream side of the heat exchanging element 2. As a result, the air cleaning effect can be increased even when the space for the outside air filter 5 is small in the part of the supply air passage 23 upstream of the heat exchanging element 2 because of limitations of product size.

Note that, while the board opening 16 is formed on the bottom plate 1b in the first embodiment, the board opening 16 may be formed on the left side plate 1e, the right side plate 1f, or the like. In addition, while the heat exchange ventilator 100 is installed near the ceiling surface 31 on the wall surface 30 of the building in the first embodiment, this is not intended to limit the installation positions of the heat exchange ventilator 100. For example, the heat exchange ventilator 100 may be installed near the floor surface on the wall surface 30 of the building. In a case where the heat exchange ventilator 100 is installed near the floor surface on the wall surface 30 of the building, the board opening 16 may be formed on the top plate 1a, the left side plate 1e, or the right side plate 1f, for example, which facilitates the work on the second board 15b. In addition, the heat exchange ventilator 100 may be installed on the ceiling surface 31 of the building. In the case where the heat exchange ventilator 100 is installed on the ceiling surface 31 of the building, the board opening 16 may be formed on the bottom plate 1b, the left side plate 1e, or the right side plate 1f, which facilitates the work on the second board 15b.

### Second Embodiment.

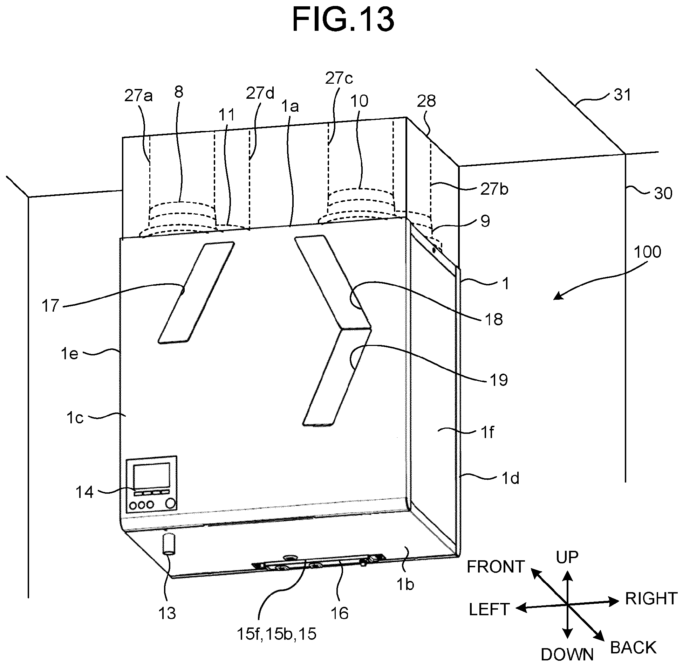

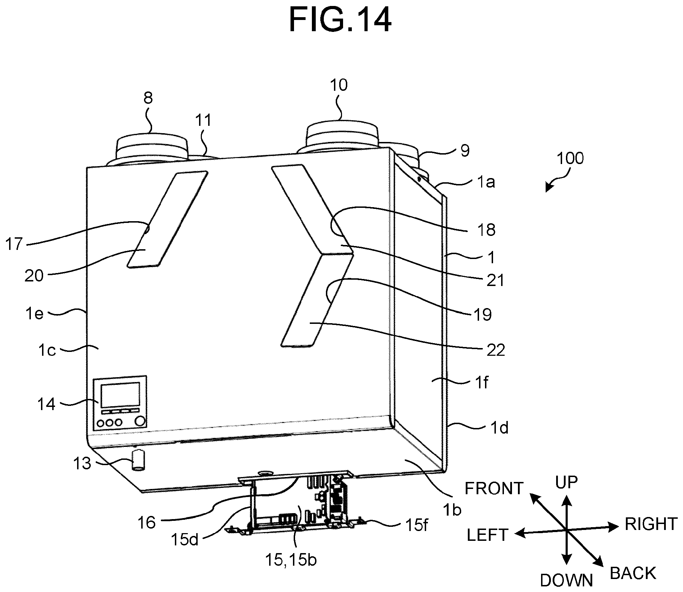

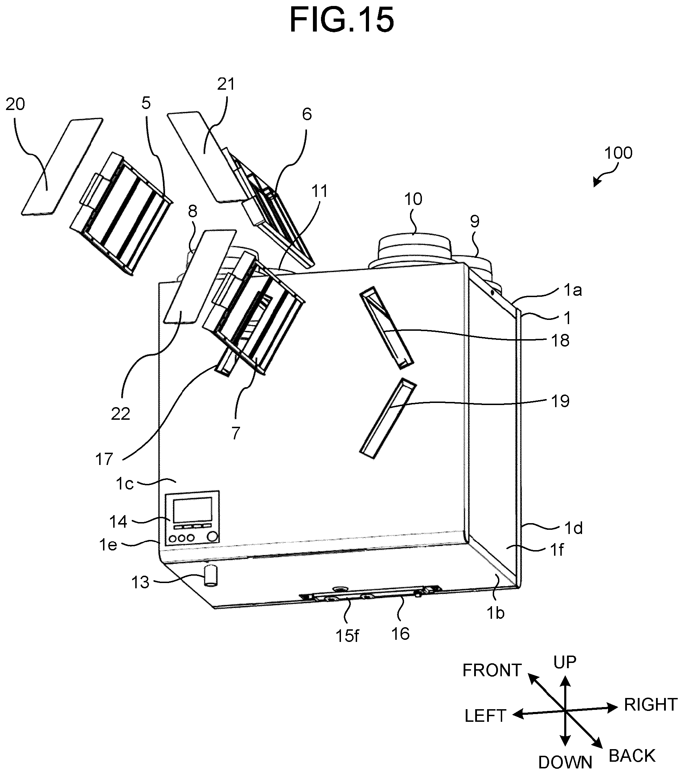

FIG. 13 is a perspective view illustrating the assembly state of a heat exchange ventilator 100 according to a second embodiment of the present invention, in which the heat exchange ventilator 100 is hung and installed on a wall surface 30 of a building. FIG. 14 is a perspective view illustrating a state in which a control board 15 is pulled out of a housing 1 from the heat exchange ventilator 100 illustrated in FIG. 13. FIG. 15 is a perspective view illustrating a state in which filters 5, 6, and 7 and filter covers 20, 21, and 22 are removed from the heat exchange ventilator 100 illustrated in FIG. 13. The second embodiment differs from the first embodiment in that the outside inlet 8, the inside inlet 9, the inside outlet 10, and the outside outlet 11 are arranged at horizontally flipped positions. The second embodiment also differs from the first embodiment in that the housing 1 is in a posture turned by 180 degrees. Note that, in the second embodiment, parts overlapping with those of the first embodiment will be represented by the same reference numerals and the description thereof will not be repeated.

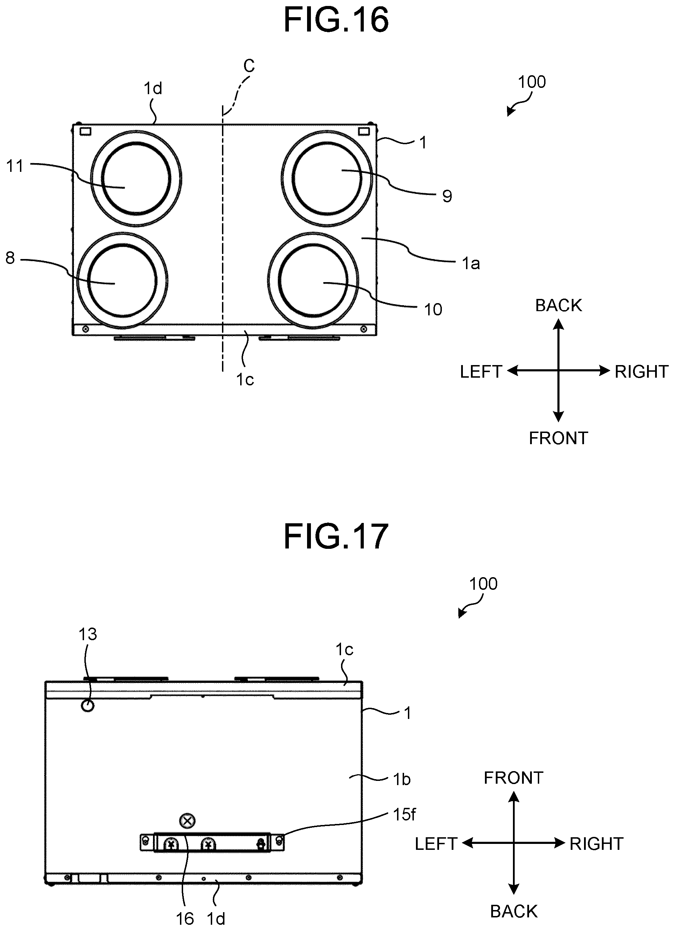

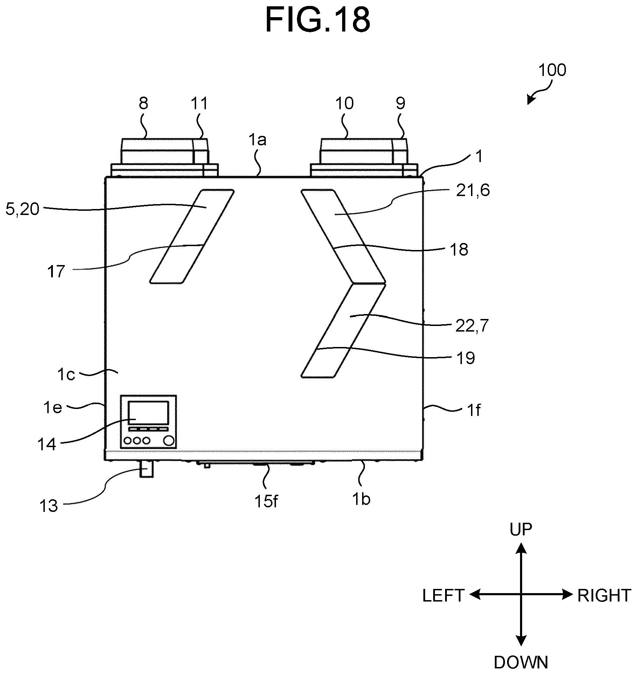

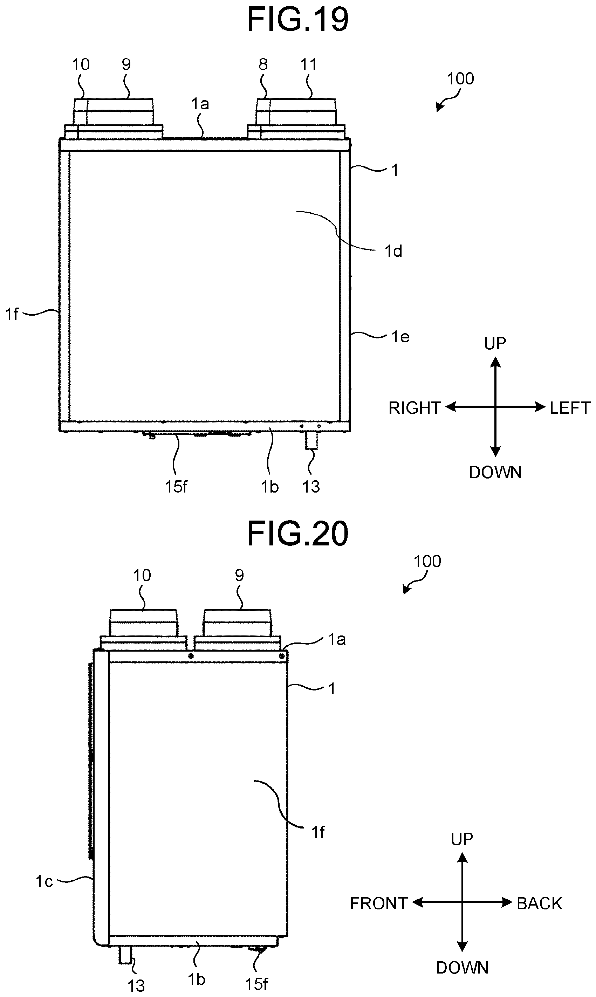

FIG. 16 is a plan view of the heat exchange ventilator 100 according to the second embodiment. FIG. 17 is a bottom view of the heat exchange ventilator 100 according to the second embodiment. FIG. 18 is a front view of the heat exchange ventilator 100 according to the second embodiment. FIG. 19 is a back view of the heat exchange ventilator 100 according to the second embodiment. FIG. 20 is a side view of the heat exchange ventilator 100 according to the second embodiment. Hereinafter, the heat exchange ventilator 100 according to the second embodiment will be described in comparison with the heat exchange ventilator 100 according to the first embodiment illustrated in FIGS. 2 to 5 and 10.

The outside inlet 8, the inside inlet 9, the inside outlet 10, and the outside outlet 11 illustrated in FIG. 16 are arranged at horizontally flipped positions as compared with the example illustrated in FIG. 5. Specifically, the inside inlet 9 and the inside outlet 10 are located on the right of the center line C. The outside inlet 8 and the outside outlet 11 are located on the left of the center line C.

The outside air filter opening 17, the operation unit 14, the exhaust filter opening 18, and the supply filter opening 19 illustrated in FIG. 15 are arranged at horizontally flipped positions as compared with the example illustrated in FIG. 4. Specifically, the outside air filter opening 17 is located on the left of the center of the front plate 1c in the left-right direction. The outside air filter opening 17 is sloped in such a manner that the position thereof is closer to the left side plate 1e as it is lower. In the second embodiment, the operation unit 14 is located near a lower left corner of the front plate 1c. The exhaust filter opening 18 is located on the right of the center of the front plate 1c in the left-right direction. The exhaust filter opening 18 is sloped in such a manner that the position thereof is closer to the right side plate 1f as it is lower. The supply filter opening 19 is located on the right of the center of the front plate 1c in the left-right direction. The supply filter opening 19 is sloped in such a manner that the position thereof is closer to the left side plate 1e as it is lower.

The components arranged in the housing 1 illustrated in FIGS. 13 to 15, that is, the filters 5, 6, and 7; the filter covers 20, 21, and 22; the supply fan, which is not illustrated; the exhaust fan, which is not illustrated; and the like are also arranged at horizontally flipped positions as compared with the example illustrated in FIGS. 2 to 4. Specifically, the outside air filter 5 and the outside air filter cover 20 are located on the left of the center of the housing 1 in the left-right direction. The exhaust filter 6 and the exhaust filter cover 21 are located on the right of the center of the housing 1 in the left-right direction. The supply filter 7 and the supply filter cover 22 are located on the right of the center of the housing 1 in the left-right direction. Although not illustrated, while the supply fan 3 is located on the left of the center of the housing 1 in the left-right direction in the example illustrated in FIG. 10, the supply fan 3 is located on the right of the center of the housing 1 in the left-right direction in the second embodiment. While the exhaust fan 4 is located on the right of the center of the housing 1 in the left-right direction in the example illustrated in FIG. 10, the exhaust fan 4 is located on the left of the center of the housing 1 in the left-right direction in the second embodiment.

In addition, the housing 1 illustrated in FIGS. 13 to 15 is in a state in which the housing 1 illustrated in FIGS. 2 to 4 is turned by 180 degrees about a rotation axis that is an axis along the up-down direction passing the geometric center of the bottom plate 1b. Thus, the board opening 16 and the drain hole 13 are located at positions turned by 180 degrees as compared with the example illustrated in FIGS. 2 to 4. Specifically, the board opening 16 is located on the back side with respect to the center of the bottom plate 1b in the front-back direction. In the second embodiment, the board opening 16 is located on the bottom plate 1b near the boundary with the back plate 1d. In the second embodiment, the drain hole 13 is located near a left front corner of the bottom plate 1b. When the housing 1 illustrated in FIGS. 2 to 4 is turned by 180 degrees, however, the filter openings 17, 18, and 19, the filters 5, 6, and 7, the filter covers 20, 21, and 22, the operation unit 14, and the like face the wall surface 30. Thus, in the second embodiment, the plate on which the filter openings 17, 18, 19 and the like are arranged and the plate facing the front are switched with each other when the housing 1 illustrated in FIGS. 2 to 4 is turned by 180 degrees.

In addition, when the housing 1 illustrated in FIGS. 2 to 4 is turned by 180 degrees, a component surface of the second board 15b faces the wall surface 30. Thus, the second board 15b is reversed so that the component surface of the second board 15b faces the front. In other words, even in the state in which the housing 1 is turned by 180 degrees about the rotation axis that is an axis along the up-down direction passing the geometric center of the bottom plate 1b, the second board 15b is placed in the housing 1 in such a manner that the component surface of the second board 15b faces the direction opposite the wall surface 30. Thus, the same second board 15b can be used in products in which the positions of the housing 1 and the components are different from each other, which eliminates the need for providing different second boards 15b for different products.

For manufacturing two types of devices, which are the heat exchange ventilator 100 according to the first embodiment and the heat exchange ventilator 100 according to the second embodiment: the outside inlet 8 and the like, which are main components, are horizontally flipped; the housing 1, which is a main component, is turned by 180 degrees; and some parts such as the plates of the housing 1 are switched. Thus, the heat exchange ventilator 100 according to the first embodiment and the heat exchange ventilator 100 according to the second embodiment can be manufactured by using main components in common and modifying only some parts of the components, which can increase the manufacturing efficiency.

The configurations presented in the above embodiments are examples of the present invention, and can be combined with other known technologies or can be partly omitted or modified without departing from the scope of the present invention, as defined in the appended claims.

### Reference Signs List

1 housing; 1a top plate; 1b bottom plate; 1c front plate; 1d back plate; 1e left side plate; 1f right side plate; 2 heat exchanging element; 2a partition member; 2b spacer member; 3 supply fan; 4 exhaust fan; 5 outside air filter; 6 exhaust filter; 7 supply filter; 8 outside inlet; 9 inside inlet; 10 inside outlet; 11 outside outlet; 12 drain pan; 12a base; 13 drain hole; 14 operation unit; 15 control board; 15a first board; 15b second board; 15c first board case; 15d second board case; 15e rib; 15f board cover; 16 board opening; 16a first wall; 16b second wall; 16c connecting wall part; 17 outside air filter opening; 18 exhaust filter opening; 19 supply filter opening; 20 outside air filter cover; 21 exhaust filter cover; 22 supply filter cover; 23 supply air passage; 24 exhaust air passage; 25 heat insulating component; 26 positioning frame; 26a first frame; 26b second frame; 26c contact part; 27a, 27b, 27c, 27d duct; 28 design element; 29 space; 30 wall surface; 31 ceiling surface; 100 heat exchange ventilator; C center line.

## Claims

1. A heat exchange ventilator (100) comprising:
a housing (1) having a box shape, in which a supply air passage (23) for supplying air from outside a room into the room and an exhaust air passage (24) for exhausting air from inside the room to outside the room are formed;
a supply fan (3) located in the supply air passage (23) ;
an exhaust fan (4) located in the exhaust air passage (24) ;
a heat exchanging element (2) located in the housing (1), the heat exchanging element (2) exchanging heat between air flowing in the supply air passage (23) and air flowing in the exhaust air passage (24); and
a control board (15) located in the housing (1), wherein
the housing (1) has a board opening (16) through which at least part of the control board (15) can be drawn out from an inside of the housing (1), and through which the inside of the housing (1) communicates with an outside of the housing (1), and
the heat exchange ventilator (100) further comprises a holder configured to hold the control board (15) drawn out from the housing (1) via the board opening (16) in a stationary state.

2. The heat exchange ventilator (100) according to claim 1, wherein
the housing (1) has a bottom plate (1b) facing downward, and
the bottom plate (1b) has the board opening (16).

3. The heat exchange ventilator (100) according to claim 2, wherein
the housing (1) has a top plate (1a) facing upward,
the top plate (1a) has duct connection ports (8, 9, 10, 11) through which the inside of the housing (1) communicates with the outside of the housing (1) and to which ducts (27a, 27b, 27c, 27d) are connected, and
a design element (28) hiding the duct connection ports (8, 9, 10, 11) and the ducts (27a, 27b, 27c, 27d) is placed on the top plate (1a).

4. The heat exchange ventilator (100) according to any one of claims 1 to 3, wherein
the control board (15) includes a plurality of boards (15a, 15b), and
at least one of the plurality of boards (15a, 15b) can be drawn out of the housing (1) through the board opening (16).

5. The heat exchange ventilator (100) according to any one of claims 1 to 3, wherein the control board (15) is a single board.

6. The heat exchange ventilator (100) according to any one of claims 1 to 5, wherein
the housing (1) is configured to be installed on a wall surface (30) of a building, and
the control board (15) has a component surface facing a direction opposite the wall surface (30), when the heat exchange ventilator (100) is installed thereon.

7. The heat exchange ventilator (100) according to claim 6, wherein the housing (1) includes:
an outside inlet (8) to take air from outside the room into the housing (1);
an inside inlet (9) to take air from inside the room into the housing (1);
an inside outlet (10) to blow air, taken from outside the room, out of the housing (1);
an outside outlet (11) to blow air, taken from inside the room, out of the housing (1);
an outside air filter (5) located in the supply air passage (23);
a supply filter (7) located in the supply air passage (23); and
an exhaust filter (6) located in the exhaust air passage (24), wherein
when a plate of the housing in contact with the wall surface (30) is a back plate (1d), a plate of the housing located opposite the wall surface (30) with the back plate (1d) therebetween is a front plate (1c), and a left-right direction as viewed from a user facing the front plate (1c) is referred to as a left-right direction,
the inside inlet (9), the inside outlet (10), the supply filter (7), and the exhaust filter (6) are located on left of a center of the housing (1) in the left-right direction, and
the outside inlet (8), the outside outlet (11), and the outside air filter (5) are located on right of the center of the housing (1) in the left-right direction.

8. The heat exchange ventilator (100) according to claim 6, wherein
the housing (1) includes:
an outside inlet (8) to take air from outside the room into the housing (1);
an inside inlet (9) to take air from inside the room into the housing (1);
an inside outlet (10) to blow air, taken from outside the room, out of the housing (1);
an outside outlet (11) to blow air, taken from inside the room, out of the housing (1);
an outside air filter (5) located in the supply air passage (23);
a supply filter (7) located in the supply air passage (23); and
an exhaust filter (6) located in the exhaust air passage (24), wherein
when a plate of the housing in contact with the wall surface (30) is a back plate (1d), a plate of the housing located opposite the wall surface (30) with the back plate (1d) therebetween is a front plate (1c), and a left-right direction as viewed from a user facing the front plate (1c) is referred to as a left-right direction,
the inside inlet (9), the inside outlet (10), the supply filter (7), and the exhaust filter (6) are located on right of a center of the housing (1) in the left-right direction, and
the outside inlet (8), the outside outlet (11), and the outside air filter are located on left of the center of the housing (1) in the left-right direction.

## Patentansprüche

1. Wärmetauscherlüfter (100) aufweisend:
ein Gehäuse (1) mit einer Kastenform, in dem ein Zuluftkanal (23) zum Zuführen von Luft von außerhalb eines Raums in den Raum und ein Abluftkanal (24) zum Ausblasen von Luft aus dem Raum nach außerhalb des Raums ausgebildet sind;
eine Zuluftgebläseeinheit (3), die in dem Zuluftkanal (23) angeordnet ist;
eine Abluftgebläseeinheit (4), die in dem Abluftkanal (24) angeordnet ist;
ein Wärmetauscherelement (2), das in dem Gehäuse (1) angeordnet ist, wobei das Wärmetauscherelement (2) Wärme zwischen der Luft, die in dem Zuluftkanal (23) strömt, und der Luft, die in dem Abluftkanal (24) strömt, austauscht; und
eine Steuerplatine (15), die in dem Gehäuse (1) angeordnet ist,
wobei das Gehäuse (1) eine Platinenöffnung (16) aufweist, durch die zumindest ein Teil der Steuerplatine (15) aus einem Inneren des Gehäuses (1) herausgezogen werden kann und durch die das Innere des Gehäuses (1) mit einem Äußeren des Gehäuses (1) in Verbindung steht, und
wobei der Wärmetauscherlüfter (100) des Weiteren einen Halter aufweist, der konfiguriert ist, die über die Platinenöffnung (16) aus dem Gehäuse (1) herausgezogene Steuerplatine (15) in einem stationären Zustand zu halten.

2. Wärmetauscherlüfter (100) nach Anspruch 1, wobei
das Gehäuse (1) eine Bodenplatte (1b) aufweist, die nach unten weist, und
wobei die Bodenplatte (1b) die Platinenöffnung (16) aufweist.

3. Wärmetauscherlüfter (100) nach Anspruch 2, wobei
das Gehäuse (1) eine obere Platte (1a) aufweist, die nach oben weist,
wobei die obere Platte (1a) Leitungsanschlussöffnungen (8, 9, 10, 11) aufweist, durch die das Innere des Gehäuses (1) mit dem Äußeren des Gehäuses (1) in Verbindung steht und an die Leitungen (27a, 27b, 27c, 27d) angeschlossen sind, und
wobei ein Designelement (28), das die Leitungsanschlussöffnungen (8, 9, 10, 11) und die Leitungen (27a, 27b, 27c, 27d) verdeckt, auf der oberen Platte (1a) angeordnet ist.

4. Wärmetauscherlüfter (100) nach einem der Ansprüche 1 bis 3, wobei
die Steuerplatine (15) eine Vielzahl von Platinen (15a, 15b) aufweist, und
wobei zumindest eine der Vielzahl von Platinen (15a, 15b) durch die Platinenöffnung (16) aus dem Gehäuse (1) herausgezogen werden kann.

5. Wärmetauscherlüfter (100) nach einem der Ansprüche 1 bis 3, wobei die Steuerplatine (15) eine einzelne Platine ist.

6. Wärmetauscherlüfter (100) nach einem der Ansprüche 1 bis 5, wobei
das Gehäuse (1) konfiguriert ist, an einer Wandoberfläche (30) eines Gebäudes installiert zu werden, und
die Steuerplatine (15) eine Bauelementseite aufweist, die in eine Richtung weist, die der Wandoberfläche (30) entgegengesetzt ist, wenn der Wärmetauscherlüfter (100) daran installiert ist.

7. Wärmetauscherlüfter (100) nach Anspruch 6, wobei
das Gehäuse (1) Folgendes aufweist:
einen Außenlufteinlass (8) zum Ansaugen von Luft von außerhalb des Raums in das Gehäuse (1);
einen Innenlufteinlass (9) zum Ansaugen von Luft aus dem Raum in das Gehäuse (1);
einen Innenluftauslass (10) zum Ausblasen von Luft, die von außerhalb des Raums angesaugt wurde, aus dem Gehäuse (1);
einen Außenluftauslass (11) zum Ausblasen von Luft, die aus dem Raum angesaugt wurde, aus dem Gehäuse (1);
einen Außenluftfilter (5), der in dem Zuluftkanal (23) angeordnet ist;
einen Zuluftfilter (7), der in dem Zuluftkanal (23) angeordnet ist; und
einen Abluftfilter (6), der in dem Abluftkanal (24) angeordnet ist, wobei,
wenn eine Platte des Gehäuses, die mit der Wandoberfläche (30) in Kontakt steht, eine Rückplatte (1d) ist, eine Platte des Gehäuses, die gegenüber der Wandoberfläche (30) mit der Rückplatte (1d) dazwischen angeordnet ist, eine Frontplatte (1c) ist, und eine von einem Benutzer, der der Frontplatte (1c) zugewandt ist, betrachtete Links-Rechts-Richtung als Links-Rechts-Richtung bezeichnet wird,
der Innenlufteinlass (9), der Innenluftauslass (10), der Zuluftfilter (7) und der Abluftfilter (6) sich links von einer Mitte des Gehäuses (1) in der Links-Rechts-Richtung befinden, und
der Außenlufteinlass (8), der Außenluftauslass (11) und der Außenluftfilter (5) sich rechts von der Mitte des Gehäuses (1) in der Links-Rechts-Richtung befinden.

8. Wärmetauscherlüfter (100) nach Anspruch 6, wobei
das Gehäuse (1) Folgendes aufweist:
einen Außenlufteinlass (8) zum Ansaugen von Luft von außerhalb des Raums in das Gehäuse (1);
einen Innenlufteinlass (9) zum Ansaugen von Luft aus dem Raum in das Gehäuse (1);
einen Innenluftauslass (10) zum Ausblasen von Luft, die von außerhalb des Raums angesaugt wurde, aus dem Gehäuse (1);
einen Außenluftauslass (11) zum Ausblasen von Luft, die aus dem Raum angesaugt wurde, aus dem Gehäuse (1);
einen Außenluftfilter (5), der in dem Zuluftkanal (23) angeordnet ist;
einen Zuluftfilter (7), der in dem Zuluftkanal (23) angeordnet ist; und
einen Abluftfilter (6), der in dem Abluftkanal (24) angeordnet ist, wobei,
wenn eine Platte des Gehäuses, die mit der Wandoberfläche (30) in Kontakt steht, eine Rückplatte (1d) ist, eine Platte des Gehäuses, die gegenüber der Wandoberfläche (30) mit der Rückplatte (1d) dazwischen angeordnet ist, eine Frontplatte (1c) ist, und eine von einem Benutzer, der der Frontplatte (1c) zugewandt ist, betrachtete Links-Rechts-Richtung als Links-Rechts-Richtung bezeichnet wird,
der Innenlufteinlass (9), der Innenluftauslass (10), der Zuluftfilter (7) und der Abluftfilter (6) sich rechts von einer Mitte des Gehäuses (1) in der Links-Rechts-Richtung befinden, und
der Außenlufteinlass (8), der Außenluftauslass (11) und der Außenluftfilter sich links von der Mitte des Gehäuses (1) in der Links-Rechts-Richtung befinden.

## Revendications

1. Ventilateur d'échange de chaleur (100) comprenant :
un boîtier (1) ayant une forme de boîte, dans lequel un passage d'air d'alimentation (23) pour l'alimentation en air de l'extérieur d'une pièce dans la pièce et un passage d'air d'évacuation (24) pour évacuer l'air de l'intérieur de la pièce vers l'extérieur de la pièce sont formés ;
un ventilateur d'alimentation (3) situé dans le passage d'air d'alimentation (23) ;
un ventilateur d'évacuation (4) situé dans le passage d'air d'évacuation (24) ;
un élément d'échange de chaleur (2) situé dans le boîtier (1), l'élément d'échange de chaleur (2) échangeant de la chaleur entre l'air circulant dans le passage d'air d'alimentation (23) et l'air circulant dans le passage d'air d'évacuation (24) ; et
un panneau de commande (15) situé dans le boîtier (1), dans lequel
le boîtier (1) a une ouverture de panneau (16) par laquelle au moins une partie du panneau de commande (15) peut être extraite de l'intérieur du boîtier (1), et par laquelle l'intérieur du boîtier (1) communique avec un extérieur du boîtier (1), et
le ventilateur d'échange de chaleur (100) comprend en outre un support conçu pour maintenir le panneau de commande (15) extrait du boîtier (1) par l'intermédiaire de l'ouverture de panneau (16) dans un état stationnaire.

2. Ventilateur d'échange de chaleur (100) selon la revendication 1, dans lequel
le boîtier (1) a une plaque inférieure (1b) orientée vers le bas, et
la plaque inférieure (1b) a l'ouverture de panneau (16).

3. Ventilateur d'échange de chaleur (100) selon la revendication 2, dans lequel
le boîtier (1) a une plaque supérieure (1a) orientée vers le haut,
la plaque supérieure (1a) a des orifices de raccordement de conduit (8, 9, 10, 11) par lesquels l'intérieur du boîtier (1) communique avec l'extérieur du boîtier (1) et auxquels des conduits (27a, 27b, 27c, 27d) sont raccordés, et
un élément de conception (28), cachant les orifices de raccordement de conduit (8, 9, 10, 11) et les conduits (27a, 27b, 27c, 27d), est placé sur la plaque supérieure (1a).

4. Ventilateur d'échange de chaleur (100) selon l'une quelconque des revendications 1 à 3, dans lequel
le panneau de commande (15) comporte une pluralité de panneaux (15a, 15b), et
au moins un de la pluralité de panneaux (15a, 15b) peut être extrait du boîtier (1) par l'ouverture de panneau (16).

5. Ventilateur d'échange de chaleur (100) selon l'une quelconque des revendications 1 à 3, dans lequel le panneau de commande (15) est un panneau unique.

6. Ventilateur d'échange de chaleur (100) selon l'une quelconque des revendications 1 à 5, dans lequel
le boîtier (1) est conçu pour être installé sur une surface murale (30) d'un bâtiment, et
le panneau de commande (15) a une surface de composant orientée vers une direction opposée à la surface du mur (30), lorsque le ventilateur d'échange de chaleur (100) est installé dessus.

7. Ventilateur d'échange de chaleur (100) selon la revendication 6, dans lequel
le logement (1) comporte :
une entrée extérieure (8) pour amener de l'air de l'extérieur de la pièce dans le boîtier (1) ;
une entrée intérieure (9) pour faire entrer de l'air de l'intérieur de la pièce dans le boîtier (1) ;
une sortie intérieure (10) pour souffler de l'air, provenant de l'extérieur de la pièce, hors du boîtier (1) ;
une sortie extérieure (11) pour souffler de l'air, provenant de l'intérieur de la pièce, hors du boîtier (1) ;
un filtre à air extérieur (5) situé dans le passage de l'air d'alimentation (23) ;
un filtre d'alimentation (7) situé dans le passage d'air d'alimentation (23) ; et
un filtre d'évacuation (6) situé dans le passage d'air d'évacuation (24), dans lequel
lorsqu'une plaque du boîtier en contact avec la surface murale (30) est une plaque arrière (1d), une plaque du boîtier située à l'opposé de la surface murale (30) avec la plaque arrière (1d) entre les deux est une plaque avant (1c), et une direction gauche-droite vue d'un utilisateur faisant face à la plaque avant (1c) est désignée comme une direction gauche-droite,
l'entrée intérieure (9), la sortie intérieure (10), le filtre d'alimentation (7), et le filtre d'évacuation (6) sont situés à gauche d'un centre du boîtier (1) dans le sens gauche-droite, et
l'entrée extérieure (8), la sortie extérieure (11), et le filtre à air extérieur (5) sont situés à droite du centre du boîtier (1) dans le sens gauche-droite.

8. Ventilateur d'échange de chaleur (100) selon la revendication 6, dans lequel
le logement (1) comporte :
une entrée extérieure (8) pour amener de l'air de l'extérieur de la pièce dans le boîtier (1) ;
une entrée intérieure (9) pour faire entrer de l'air de l'intérieur de la pièce dans le boîtier (1) ;
une sortie intérieure (10) pour souffler de l'air, provenant de l'extérieur de la pièce, hors du boîtier (1) ;
une sortie extérieure (11) pour souffler de l'air, provenant de l'intérieur de la pièce, hors du boîtier (1) ;
un filtre à air extérieur (5) situé dans le passage d'air d'alimentation (23) ;
un filtre d'alimentation (7) situé dans le passage d'air d'alimentation (23) ; et
un filtre d'évacuation (6) situé dans le passage d'air d'échappement (24), dans lequel
lorsqu'une plaque du boîtier en contact avec la surface murale (30) est une plaque arrière (1d), une plaque du boîtier située à l'opposé de la surface murale (30) avec la plaque arrière (1d) entre les deux est une plaque avant (1c), et une direction gauche-droite vue d'un utilisateur faisant face à la plaque avant (1c) est désignée comme une direction gauche-droite,
l'entrée intérieure (9), la sortie intérieure (10), le filtre d'alimentation (7), et le filtre d'évacuation (6) sont situés à droite d'un centre du boîtier (1) dans le sens gauche-droite, et
l'entrée extérieure (8), la sortie extérieure (11), et le filtre à air extérieur sont situés à gauche du centre du boîtier (1) dans le sens gauche-droite.
